# EUROPEAN PATENT APPLICATION

(11) **EP 4 818 533 A1**
(43) Date of publication of application: **07.10.2026**
(21) Application number: 24897686.2
(22) Date of filing: 29.11.2024
(51) Int. Cl.: F16B 11/00, B62D 25/00

(54) **ASSEMBLY, STEEL PIPE, AND METHOD FOR MANUFACTURING ASSEMBLY**

(30) Priority: 30.11.2023 JP 2023203494
(71) Applicant: Sumitomo Heavy Industries, Ltd., Tokyo 141-6025 (JP)
(72) Inventor: FUKUDA Masanori, Niihama-shi, Ehime 792-0001 (JP); UEDA Norieda, Niihama-shi, Ehime 792-0001 (JP); KUMENO Hiroyuki, Niihama-shi, Ehime 792-0001 (JP)
(74) Representative: Louis Pöhlau Lohrentz
(86) International application number: PCT/JP2024/042296
(87) International publication number: WO 2025/116002

(57) **Abstract**

A joint strength between a closed cross-section structural member and a member is made stronger than in the related art. An assembly includes a closed cross-section structural member made of a steel pipe material, and a member made of a material different from the closed cross-section structural member, in which the closed cross-section structural member and the member are fitted to each other. In this way, the joint strength between the closed cross-section structural member and the member made of a material different from the closed cross-section structural member, for fitting the closed cross-section structural member and the member made of the material different from the closed cross-section structural member to each other, can be made stronger than in the related art in which the closed cross-section structural member and the member made of a material different from the closed cross-section structural member are joined by planar contact.

## Description

### Technical Field

The technology of the present disclosure relates to an assembly, a steel pipe, and a method for manufacturing an assembly.

### Background Art

Japanese Unexamined Patent Publication No. 2009-220141 discloses a pipe product manufacturing apparatus. The pipe product manufacturing apparatus includes a blow-forming die consisting of a lower die and an upper die, a pipe support mechanism that horizontally supports a pipe between the lower die and the upper die so that the pipe can be raised and lowered, an electric heating mechanism that energizes and heats the pipe supported by the pipe support mechanism, and a gas blowing mechanism that blows high-pressure gas into the heated pipe. The pipe is heated to a quenching temperature by electric heating, is closed by the blow-forming die, is expanded by blowing the high-pressure gas, and comes into contact with the die. Since the pipe is heated to the quenching temperature and the die is at normal temperature, the pipe is rapidly cooled by the die and quenched. As a result, a pipe product is manufactured.

Such a pipe product is used by being joined to an aluminum cast member. Specifically, the pipe product and the aluminum cast member are disposed to be in planar contact with each other. The joining of the pipe product and the aluminum cast member is performed by inserting a bolt from the inside of the pipe product into a nut embedded in the aluminum cast member and fastening the bolt.

### Summary of Invention

### Technical Problem

However, when a certain force acts on the aluminum cast member, the force is transmitted from the aluminum cast member to the pipe product in planar contact with the aluminum cast member via a mechanical fastening portion, and the joint strength is weak. Specifically, stress concentration may occur in the mechanical fastening portion, and buckling may occur at the joint.

The technology of the present disclosure has been made in view of the above-described circumstances, and an object of the present disclosure is to provide an assembly, a steel pipe, and a method for manufacturing an assembly, in which a joint strength between a closed cross-section structural member and a member can be made stronger than that in the related art.

### Solution to Problem

An assembly according to a first aspect of the technology of the present disclosure is an assembly including a closed cross-section structural member including a first joint portion, and a member including a second joint portion, in which the closed cross-section structural member and the member are joined to each other by the first joint portion and the second joint portion, and the first joint portion and the second joint portion have complementary shapes that are complementary to each other.

A moving body according to a second aspect includes the closed cross-section structural member according to the first aspect as a frame.

A third aspect is a method for assembling an assembly including a closed cross-section structural member including a first joint portion, and a member including a second joint portion, the method including joining the first joint portion of the closed cross-section structural member and the second joint portion of the member to each other, in which the first joint portion and the second joint portion have complementary shapes that are complementary to each other.

A member according to a fourth aspect is a member that is joined to a closed cross-section structural member including a first joint portion, the member including a second joint portion having a shape complementary to the first joint portion, in which the closed cross-section structural member and the member are joined to each other by the first joint portion and the second joint portion.

A fifth aspect is an assembly including a closed cross-section structural member made of a steel pipe material, and a member made of a material different from the closed cross-section structural member, in which the closed cross-section structural member and the member are fitted to each other.

A sixth aspect is a steel pipe made of a steel pipe material, in which the steel pipe is configured to be fitted to a member made of a material different from the steel pipe.

A method for manufacturing an assembly according to a seventh aspect includes fitting a closed cross-section structural member made of a steel pipe material and a member made of a material different from the closed cross-section structural member to each other, thereby manufacturing the assembly.

### Advantageous Effects of Invention

The technology of the present disclosure has been made in view of the above-described circumstances, and a joint strength between a closed cross-section structural member and a member can be made stronger than that in the related art.

### Brief Description of Drawings

FIG. 1 is a cross-sectional view of an example of each of a closed cross-section structural member and an assembly of a first embodiment.
FIG. 2 is a cross-sectional view of an example of an assembly of a second embodiment.
FIG. 3 is a cross-sectional view of an example of an assembly of a third embodiment.
FIG. 4 is a cross-sectional view of an example of an assembly of a fourth embodiment.
FIG. 5 is a cross-sectional view of an example of each of a closed cross-section structural member and an assembly of a fifth embodiment.
FIG. 6 is a cross-sectional view of an example of an assembly of a sixth embodiment.
FIG. 7 is a cross-sectional view of an example of an assembly of a seventh embodiment.
FIG. 8A is a cross-sectional view of an example of an assembly of an eighth embodiment.
FIG. 8B is a cross-sectional view of an example of an assembly of a ninth embodiment.
FIG. 9A is a cross-sectional view of an example of an assembly of a tenth embodiment.
FIG. 9B is a cross-sectional view of an example of an assembly of an eleventh embodiment.
FIG. 10A is a cross-sectional view of an example of an assembly of a twelfth embodiment.
FIG. 10B is a cross-sectional view of an example of an assembly of a thirteenth embodiment.
FIG. 11 is a cross-sectional view of an example of an assembly of a fourteenth embodiment.
FIG. 12 is a cross-sectional view of an example of an aluminum cast member of an assembly of a fifteenth embodiment.
FIG. 13 is a cross-sectional view of an example of the assembly of the fifteenth embodiment.
FIG. 14A is a cross-sectional view taken along line A-A in FIG. 13.
FIG. 14B is a cross-sectional view taken along line A-A in FIG. 13 in a modification example of the assembly of the fifteenth embodiment.
FIG. 15 is an exploded cross-sectional view of an example of an assembly of a sixteenth embodiment.

### Description of Embodiments

Hereinafter, embodiments of the technology of the present disclosure will be described with reference to the drawings.

### [First Embodiment]

### (Configuration)

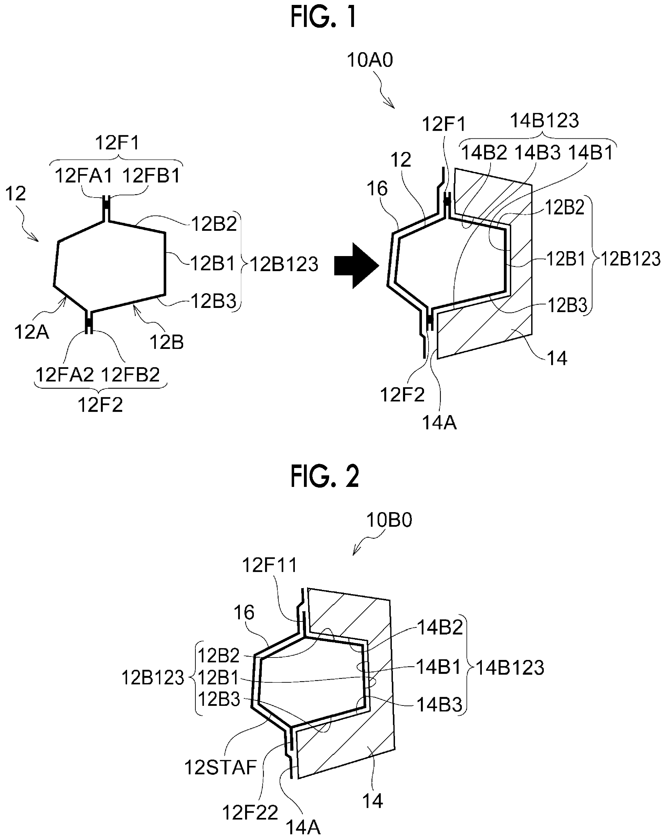

FIG. 1 is a cross-sectional view of an example of each of a closed cross-section structural member 12 and an assembly 10A0 of a first embodiment. The assembly 10A0 includes the closed cross-section structural member 12 including a first joint portion 12B123 and an aluminum cast member 14 including a second joint portion 14B123. The closed cross-section structural member 12 and the aluminum cast member 14 are joined to each other by the first joint portion 12B123 and the second joint portion 14B123.

The closed cross-section structural member 12 is configured with a plurality of, for example, two structural members 12A and 12B. Each of the two structural members 12A and 12B is manufactured by bending one flat plate such that a plurality of, for example, three surfaces are formed. Flanges 12FA1 and 12FA2 are formed at both ends of the structural member 12A. Flanges 12FB1 and 12FB2 are formed at both ends of the structural member 12B. The flange 12FA1 and the flange 12FB1, and the flange 12FA2 and the flange 12FB2 are each, for example, spot-welded to form a first overlapping flange portion 12F1 and a second overlapping flange portion 12F2. As a result, the closed cross-section structural member 12 is manufactured.

The closed cross-section structural member 12 is a component extending in a direction perpendicular to the paper surface of FIG. 1. A cross section of the closed cross-section structural member 12 is hollow and polygonal. The cross section of the closed cross-section structural member 12 is, for example, a hexagon. However, the cross section is not limited to a hexagon and may be a quadrangle or a pentagon. Furthermore, the cross section may have a curve.

The aluminum cast member 14 is manufactured by heating aluminum to a temperature equal to or higher than a melting point to melt the aluminum, pouring the molten aluminum into a mold made of sand or the like such that a second joint portion 14B123 is formed, and cooling the molten aluminum. The aluminum cast member 14 is a component extending in a direction perpendicular to the paper surface of FIG. 1.

The first joint portion 12B123 of the closed cross-section structural member 12 and the second joint portion 14B123 of the aluminum cast member 14 have complementary shapes that are complementary to each other. A shape of the first joint portion 12B123 is a protruding shape, and a shape of the second joint portion 14B123 is a shape in which a surface 14A on the closed cross-section structural member 12 side is recessed. The first joint portion 12B123 is embedded in the second joint portion 14B123. Specifically, 1/3 or more of a peripheral length of a cross section of the first joint portion 12B123 is embedded in the second joint portion 14B123.

The first joint portion 12B123 of the closed cross-section structural member 12 includes a first surface 12B1, and a second surface 12B2 and a third surface 12B3 intersecting the first surface 12B1. The first surface 12B1, the second surface 12B2, and the third surface 12B3 are surfaces on an outer side of the first joint portion 12B123. An angle formed by the first surface 12B1, and the second surface 12B2 and the third surface 12B3 intersecting the first surface 12B1 is an obtuse angle.

The second joint portion 14B123 of the aluminum cast member 14 includes a first surface 14B1, and a second surface 14B2 and a third surface 14B3 intersecting the first surface 14B1. The first surface 14B1, the second surface 14B2, and the third surface 14B3 are surfaces on an inner side of the second joint portion 14B123. An angle formed by the first surface 14B1, and the second surface 12B2 and the third surface 12B3 intersecting the first surface 14B1 is an obtuse angle.

An angle formed by the first surface 12B1 and the second surface 12B2 is equal to an angle formed by the first surface 14B1 and the second surface 14B2. An angle formed by the first surface 12B1 and the third surface 12B3 is equal to an angle formed by the first surface 14B1 and the third surface 14B3. The first surface 12B1 of the first joint portion 12B123 and the first surface 14B1 of the second joint portion 14B123 are joined to each other, the second surface 12B2 and the second surface 14B2 are joined to each other, and the third surface 12B3 and the third surface 14B3 are joined to each other.

The assembly 10A0 further includes a reinforcing member 16 that reinforces the joining between the closed cross-section structural member 12 and the aluminum cast member 14. The reinforcing member 16 is joined to the closed cross-section structural member 12 or the aluminum cast member 14 to cover a portion of the closed cross-section structural member 12 that is not embedded in the aluminum cast member 14. The reinforcing member 16 is formed by being bent to cover the portion that is not embedded in the aluminum cast member 14.

### (Method for Manufacturing Assembly)

Next, a method for manufacturing the assembly 10A0 will be described. The method for manufacturing the assembly 10A0 includes a first method and a second method.

The first method will be described.

The closed cross-section structural member 12 and the aluminum cast member 14 are manufactured as described above. The closed cross-section structural member 12 and the aluminum cast member 14 may be manufactured in any order or simultaneously.

The closed cross-section structural member 12 and the aluminum cast member 14 are disposed such that the first joint portion 12B123 is embedded in the second joint portion 14B123. Specifically, the closed cross-section structural member 12 and the aluminum cast member 14 are disposed such that the first surface 12B1 of the first joint portion 12B123 and the first surface 14B1 of the second joint portion 14B123 are in contact with each other, the second surface 12B2 and the second surface 14B2 are in contact with each other, and the third surface 12B3 and the third surface 14B3 are in contact with each other. The disposition of the closed cross-section structural member 12 and the aluminum cast member 14 is performed by bringing any one of the closed cross-section structural member 12 and the aluminum cast member 14 close to the other or by moving each of the closed cross-section structural member 12 and the aluminum cast member 14 close to each other.

The first joint portion 12B123 of the closed cross-section structural member 12 and the second joint portion 14B123 of the aluminum cast member 14 are joined to each other. Specifically, the first surface 12B1 and the first surface 14B1, the second surface 12B2 and the second surface 14B2, and the third surface 12B3 and the third surface 14B3 are joined to each other by mechanical fastening, welding, an adhesive, or other joining methods. In the mechanical fastening, for example, as described above, the first joint portion 12B123 of the closed cross-section structural member 12 and the second joint portion 14B123 of the aluminum cast member 14 are joined to each other using a bolt and a nut. The welding includes, for example, spot welding, arc (plasma) welding, and laser welding. As other joining methods, for example, spot joining or continuous joining by friction stir joining is available.

The reinforcing member 16 is joined to the closed cross-section structural member 12 or the aluminum cast member 14 to cover a portion of the closed cross-section structural member 12 that is not embedded in the aluminum cast member 14. The joining is performed by mechanical fastening, welding, an adhesive, or other joining methods as described above.

A second method will be described. Since the second method is substantially the same as the first method, different parts will be described.

The structural member 12B and the aluminum cast member 14 are disposed such that the first surface 12B1 of the first joint portion 12B123 and the first surface 14B1 of the second joint portion 14B123 are in contact with each other, the second surface 12B2 and the second surface 14B2 are in contact with each other, and the third surface 12B3 and the third surface 14B3 are in contact with each other. The disposition of the structural member 12B and the aluminum cast member 14 is performed by bringing any one of the structural member 12B and the aluminum cast member 14 close to the other or by moving each of the structural member 12B and the aluminum cast member 14 close to each other.

The first joint portion 12B123 and the second joint portion 14B123 are joined to each other. The joining is performed by mechanical fastening, welding, an adhesive, or other joining methods as described above.

Any one of the structural member 12A and the structural member 12B to which the aluminum cast member 14 is joined is brought close to the other, or each of the structural member 12A and the structural member 12B to which the aluminum cast member 14 is joined is moved close to each other.

The flange 12FA1 and the flange 12FB1, and the flange 12FA2 and the flange 12FB2 are spot-welded to each other, for example, to form the first overlapping flange portion 12F1 and the second overlapping flange portion 12F2. At this stage, the closed cross-section structural member 12 is manufactured.

The reinforcing member 16 is disposed as described above.

### (Moving Body)

The assembly 10A0 is provided in a moving body, for example, a vehicle. Specifically, the closed cross-section structural member 12 is provided as a cabin frame for an occupant.

More specifically, for example, the aluminum cast member 14 is provided on each of the right and left sides of the front wheels and on each of the right and left sides of the rear wheels. The closed cross-section structural member 12 is joined to each of the aluminum cast members 14 provided on the left wheel side of the front side and the left wheel side of the rear side, and the closed cross-section structural member 12 is joined to each of the aluminum cast members 14 provided on the right wheel side of the front side and the right wheel side of the rear side.

The assembly 10A0 is manufactured on each of the right and left sides of the front wheels and on each of the right and left sides of the rear wheels. The reinforcing member 16 is disposed in each assembly 10A0 as described above.

As described above, in the present embodiment, a method for manufacturing a moving body is also provided.

### (Effects)

In the related art, the closed cross-section structural member and the aluminum cast member are joined by planar contact. However, in the present embodiment, since the first joint portion and the second joint portion for joining the closed cross-section structural member and the aluminum cast member to each other have complementary shapes that are complementary to each other, the joint strength between the closed cross-section structural member and the aluminum cast member can be made stronger than that in the related art.

In the present embodiment, when a certain force acts on the aluminum cast member, the force is transmitted from the aluminum cast member to the closed cross-section structural member joined to the aluminum cast member. In this case, as described above, since the first joint portion and the second joint portion have complementary shapes that are complementary to each other, the force acting on the aluminum cast member is easily transmitted from the aluminum cast member to the closed cross-section structural member. Therefore, in the present embodiment, it is possible to suppress buckling due to stress concentration in the first joint portion and the second joint portion.

In the present embodiment, since the first joint portion is embedded in the second joint portion, it is possible to suppress buckling due to stress concentration in a portion of the first joint portion that is embedded in the second joint portion.

The first joint portion of the closed cross-section structural member and the second joint portion of the aluminum cast member have complementary shapes that are complementary to each other. The shape of the first joint portion is a protruding shape, the shape of the second joint portion is a recessed shape, and the first joint portion is embedded in the second joint portion. Therefore, in the present embodiment, it is possible to improve the positioning accuracy of the closed cross-section structural member in the horizontal direction (direction perpendicular to the longitudinal direction (up-down direction of the paper surface in FIG. 1)) compared to the related art.

### [Second Embodiment]

### (Configuration)

Next, a configuration of an assembly 10B0 of a second embodiment will be described. Since the configuration of the assembly 10B0 of the second embodiment is substantially the same as the configuration of the assembly 10A0 of the first embodiment, different parts will be described.

FIG. 2 is a cross-sectional view of an example of the assembly 10B0 of the second embodiment.

The assembly 10B0 includes the following closed cross-section structural member 12STAF instead of the closed cross-section structural member 12 of the first embodiment.

The closed cross-section structural member 12STAF is a closed cross-section member in which two flanges 12F11 and 12F22 and a first joint portion 12B123 are integrally formed by one pipe material.

The closed cross-section structural member 12STAF is manufactured, for example, as follows. One hollow pipe material is heated to a quenching temperature by electric heating, is closed by a blow-forming die manufactured such that the two flanges 12F11 and 12F22 and the first joint portion 12B123 are formed, is expanded by blowing the high-pressure gas, and comes into contact with the blow-forming die. While the pipe material is heated to the quenching temperature, the blow-forming die that is cooled by the water circulation mechanism is at normal temperature. Therefore, the pipe material is rapidly cooled in the die, and quenching is performed. As a result, the closed cross-section structural member 12STAF is manufactured.

Although an example in which the pipe material is heated by electric heating has been described, furnace heating in which the pipe material is heated in a furnace may be used.

### (Method for Manufacturing Assembly)

A method for manufacturing the assembly 10B0 of the second embodiment is substantially the same as the first method for manufacturing the assembly 10A0 of the first embodiment, except that the closed cross-section structural member 12STAF is used instead of the closed cross-section structural member 12 of the first embodiment.

### (Moving Body)

The assembly 10B0 is provided in a moving body, for example, a vehicle, which is the same as in the first embodiment. Specifically, the closed cross-section structural member 12STAF is provided as a cabin frame for an occupant.

As described above, in the second embodiment as well, a method for manufacturing a moving body is provided as in the first embodiment.

### (Effects)

The assembly of the second embodiment has the same effects as the assembly of the first embodiment.

In the assembly of the second embodiment, the closed cross-section structural member 12STAF is used.

Therefore, the plate thickness of the closed cross-section structural member 12STAF can be reduced as compared with the closed cross-section structural member 12 of the first embodiment, and weight reduction can be achieved.

Since the closed cross-section structural member 12STAF is used, the cross section of the pipe material can be changed in the longitudinal direction or the cross-sectional shape can be complicated. Therefore, the cross-sectional performance can be improved within a limited layout, and the strength and rigidity of the closed cross-section structural member 12STAF can be improved.

The closed cross-section structural member 12STAF is a pipe structure, and a closed cross section integrated with a flange can be formed. Therefore, the closed cross-section structural member 12STAF is easily joined to other components. As a result, it is possible to integrate the assembly composed of a plurality of components, and the number of dies and the number of manufacturing steps can be reduced.

By adopting electric heating for heating the pipe material to manufacture the closed cross-section structural member 12STAF, it is possible to make the facility more compact than in the first embodiment, and the equipment investment cost can be reduced as compared with the first embodiment.

### [Third Embodiment]

### (Configuration)

Next, a configuration of an assembly 10A1 of a third embodiment will be described. Since the configuration of the assembly 10A1 of the third embodiment is substantially the same as the configuration of the assembly 10A0 of the first embodiment, different parts will be described.

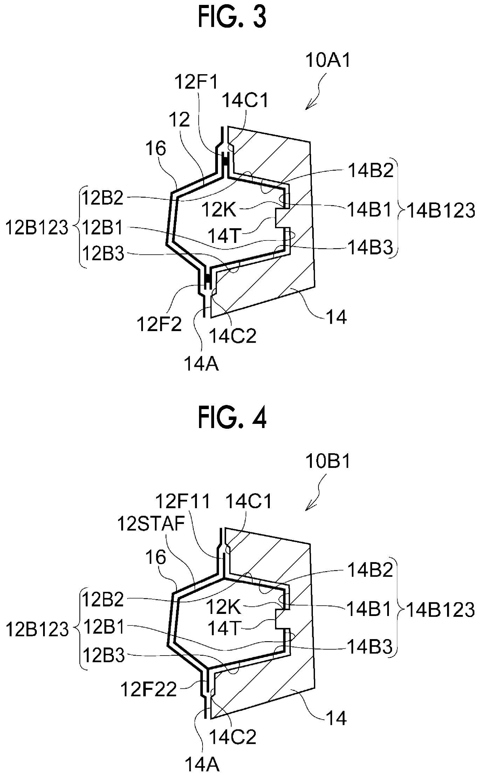

FIG. 3 is a cross-sectional view of an example of the assembly 10A1 of the third embodiment.

Flange portion accommodation units 14C1 and 14C2 that accommodate a first overlapping flange portion 12F1 and a second overlapping flange portion 12F2 are formed on a surface 14A of the aluminum cast member 14 on the closed cross-section structural member 12 side. The flange portion accommodation units 14C1 and 14C2 are recessed portions of the surface 14A, which are recessed.

A plurality of protrusions are formed at predetermined intervals in the longitudinal direction on one of a first surface 12B1 and a first surface 14B1, and a plurality of opening portions for inserting each protrusion are formed on the other of the first surface 12B1 and the first surface 14B1. In the present embodiment, the first surface 14B1 includes a protrusion 14T, and an opening portion 12K for inserting the protrusion 14T is formed in the first surface 12B1.

### (Method for Manufacturing Assembly)

Since a method for manufacturing the assembly 10A1 is substantially the same as the method for manufacturing the assembly 10A0 of the first embodiment (the first method and the second method), different parts will be described.

In the present embodiment, a mold for manufacturing the aluminum cast member 14 is configured such that the flange portion accommodation units 14C1 and 14C2 are formed on the surface 14A of the aluminum cast member 14 on the closed cross-section structural member 12 side, and the protrusion 14T is formed on the first surface 14B1 of the second joint portion 14B123. The aluminum cast member 14 is manufactured using the mold.

The opening portion 12K for inserting the protrusion 14T is formed in the first surface 12B1 of the first joint portion 12B123 of the closed cross-section structural member 12.

In the first method, the closed cross-section structural member 12 and the aluminum cast member 14 are disposed such that the protrusion 14T is inserted into the opening portion 12K.

In the second method, the structural member 12B and the aluminum cast member 14 are disposed such that the protrusion 14T is inserted into the opening portion 12K.

The first overlapping flange portion 12F1 and the second overlapping flange portion 12F2 are accommodated in the flange portion accommodation units 14C1 and 14C2.

### (Moving Body)

The assembly 10A1 is provided in a moving body, for example, a vehicle. Specifically, the closed cross-section structural member 12 is provided as a cabin frame for an occupant.

As described above, in the third embodiment as well, a method for manufacturing a moving body is provided as in the first embodiment.

### (Effects)

The present embodiment has the same effects as the effects of the first embodiment.

In the third embodiment, since the protrusion 14T is inserted into the opening portion 12K, the positioning accuracy of the closed cross-section structural member 12 in the longitudinal direction can be improved as compared with the first embodiment.

### [Fourth Embodiment]

### (Configuration)

Next, a configuration of an assembly 10B1 of a fourth embodiment will be described. Since the configuration of the assembly 10B1 of the fourth embodiment is substantially the same as the configuration of the assembly 10B0 of the second embodiment, different parts will be described.

FIG. 4 is a cross-sectional view of an example of the assembly 10B1 of the fourth embodiment.

In the fourth embodiment as well, as in the third embodiment, flange portion accommodation units 14C1 and 14C2 that accommodate the flanges 12F11 and 12F22 are formed on the surface 14A of the aluminum cast member 14 on the closed cross-section structural member 12 side.

A plurality of protrusions are formed at predetermined intervals in the longitudinal direction on one of a first surface 12B1 and a first surface 14B1, and a plurality of opening portions for inserting each protrusion are formed on the other of the first surface 12B1 and the first surface 14B1. In the present embodiment, as in the third embodiment, the first surface 14B1 includes a protrusion 14T, and an opening portion 12K for inserting the protrusion 14T is formed in the first surface 12B1.

### (Method for Manufacturing Assembly)

A method for manufacturing the assembly 10B1 of the fourth embodiment is substantially the same as the method for manufacturing the assembly 10B0 of the second embodiment. In the present embodiment as well, as in the third embodiment, the mold for manufacturing the aluminum cast member 14 is configured such that the flange portion accommodation units 14C1 and 14C2 are formed on the surface 14A of the aluminum cast member 14 on the closed cross-section structural member 12 side, and the protrusion 14T is formed on the first surface 14B1 of the second joint portion 14B123. The aluminum cast member 14 is manufactured using the mold.

The opening portion 12K for inserting the protrusion 14T is formed in the first surface 12B1 of the first joint portion 12B123 of the closed cross-section structural member 12STAF.

The closed cross-section structural member 12STAF and the aluminum cast member 14 are disposed such that the flanges 12F11 and 12F22 are accommodated in the flange portion accommodation units 14C1 and 14C2 and the protrusion 14T is inserted into the opening portion 12K.

### (Moving Body)

The assembly 10B1 is provided in a moving body, for example, a vehicle, which is the same as in the second embodiment. Specifically, the closed cross-section structural member 12STAF is provided as a cabin frame for an occupant.

As described above, in the fourth embodiment as well, a method for manufacturing a moving body is also provided as in the second embodiment.

### (Effects)

The present embodiment has the same effects as the effects of the second embodiment.

In the fourth embodiment, since the protrusion 14T is inserted into the opening portion 12K, the positioning accuracy of the closed cross-section structural member 12 in the longitudinal direction can be improved as compared with the second embodiment.

### [Fifth Embodiment]

### (Configuration)

Next, a configuration of an assembly 10B2 of a fifth embodiment will be described. Since the configuration of the assembly 10B2 of the fifth embodiment is substantially the same as the configuration of the assembly 10B1 of the fourth embodiment, different parts will be described.

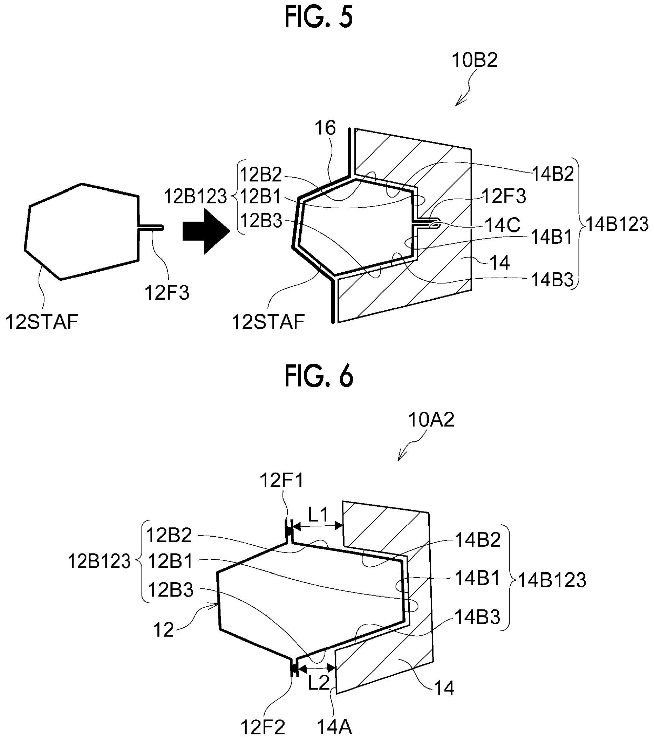

FIG. 5 is a cross-sectional view of an example of each of a closed cross-section structural member 12STAF and the assembly 10B2 of the fifth embodiment.

In the closed cross-section structural member 12STAF of the fifth embodiment, one flange 12F3 is formed.

A flange portion accommodation unit 14C3 that accommodates the flange 12F3 is formed on the first surface 14B1 of the second joint portion 14B123 of the aluminum cast member 14.

### (Method for Manufacturing Assembly)

A method for manufacturing the assembly 10B2 of the fifth embodiment is substantially the same as the method for manufacturing the assembly 10B1 of the fourth embodiment. In the present embodiment, a mold for manufacturing the aluminum cast member 14 is configured such that the flange portion accommodation unit 14C3 is formed on the first surface 14B1 of the second joint portion 14B123. The aluminum cast member 14 is manufactured using the mold.

The closed cross-section structural member 12STAF and the aluminum cast member 14 are disposed such that the flange 12F3 of the closed cross-section structural member 12STAF is accommodated in the flange portion accommodation unit 14C32 of the first surface 14B1 of the second joint portion 14B123 of the aluminum cast member 14.

### (Moving Body)

The assembly 10B2 is provided in a moving body, for example, a vehicle, which is the same as in the fourth embodiment. Specifically, the closed cross-section structural member 12STAF is provided as a cabin frame for an occupant.

As described above, in the fifth embodiment as well, a method for manufacturing a moving body is also provided as in the fourth embodiment.

### (Effects)

The present embodiment has the same effects as the effects of the second embodiment.

In the fifth embodiment, the closed cross-section structural member 12STAF and the aluminum cast member 14 are disposed such that the flange 12F3 of the closed cross-section structural member 12STAF is accommodated in the flange portion accommodation unit 14C3 of the first surface 14B1 of the second joint portion 14B123 of the aluminum cast member 14. Therefore, the positioning accuracy of the closed cross-section structural member 12STAF in the horizontal direction (direction perpendicular to the longitudinal direction (up-down direction of the paper surface in FIG. 5)) of the closed cross-section structural member 12STAF can be improved as compared with the related art.

### [Sixth Embodiment]

### (Configuration)

Next, a configuration of an assembly 10A2 of a sixth embodiment will be described. Since the configuration of the assembly 10A2 of the sixth embodiment is substantially the same as the configuration of the assembly 10A0 of the first embodiment, different parts will be described.

FIG. 6 is a cross-sectional view of an example of the assembly of the sixth embodiment.

In the first embodiment, the interval between the surface 14A of the aluminum cast member 14 on the closed cross-section structural member 12 side and the first overlapping flange portion 12F1 and the second overlapping flange portion 12F2 is 0.

On the other hand, in the sixth embodiment, the intervals between the surface 14A of the aluminum cast member 14 on the closed cross-section structural member 12 side and the first overlapping flange portion 12F1 and the second overlapping flange portion 12F2 are L1 and L2, respectively, which are larger than 0.

### (Method for Manufacturing Assembly)

A method for manufacturing the assembly 10A2 of the sixth embodiment is substantially the same as the method for manufacturing the assembly 10A0 of the first embodiment. The closed cross-section structural member 12 and the aluminum cast member 14 are disposed such that the intervals between the surface 14A of the aluminum cast member 14 on the closed cross-section structural member 12 side and the first overlapping flange portion 12F1 and the second overlapping flange portion 12F2 are L1 and L2, respectively. In this manner, a member such as a harness can be inserted between the surface 14A of the aluminum cast member 14 on the closed cross-section structural member 12 side and the first overlapping flange portion 12F1 and the second overlapping flange portion 12F2, and the degree of freedom in handling the member can be increased.

In the method for manufacturing the assembly 10A2 of the sixth embodiment, the reinforcing member 16 is not disposed as in the first embodiment, but the reinforcing member 16 may be disposed as in the first embodiment.

### (Moving Body)

The assembly 10A2 is provided in a moving body, for example, a vehicle, which is the same as in the first embodiment. Specifically, the closed cross-section structural member 12 is provided as a cabin frame for an occupant.

As described above, in the sixth embodiment as well, a method for manufacturing a moving body is also provided as in the first embodiment.

### (Effects)

The present embodiment has the same effects as the effects of the first embodiment.

### [Seventh Embodiment]

### (Configuration)

Next, a configuration of an assembly 10B3 of a seventh embodiment will be described. Since the configuration of the assembly 10B3 of the seventh embodiment is substantially the same as the configuration of the assembly 10A2 of the sixth embodiment, different parts will be described.

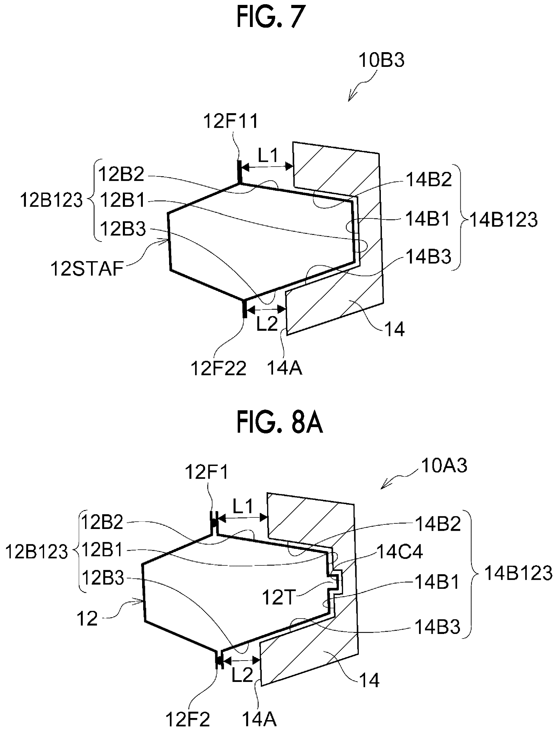

FIG. 7 is a cross-sectional view of an example of the assembly 10B3 of the seventh embodiment.

The assembly 10B3 of the seventh embodiment is different from the assembly 10A2 of the sixth embodiment in that the assembly 10B3 includes a closed cross-section structural member 12STAF of the second embodiment instead of the closed cross-section structural member 12 of the assembly 10A2 of the sixth embodiment.

In the seventh embodiment, each of the intervals between the surface 14A of the aluminum cast member 14 on the closed cross-section structural member 12 side and the flanges 12F11 and F22 is L1 and L2, which are larger than 0. As a result, a member such as a harness can be inserted between the surface 14A of the aluminum cast member 14 on the closed cross-section structural member 12 side and the flanges 12F11 and F22, and the degree of freedom in handling the member can be increased.

### (Method for Manufacturing Assembly)

A method for manufacturing the assembly 10B3 of the seventh embodiment is substantially the same as the method for manufacturing the assembly 10A20 of the sixth embodiment. The closed cross-section structural member 12STAF of the second embodiment is used instead of the closed cross-section structural member 12 of the assembly 10A2 of the sixth embodiment.

In the method for manufacturing the assembly 10B3 of the seventh embodiment, the reinforcing member 16 is not disposed as in the first embodiment, but the reinforcing member 16 may be disposed as in the first embodiment.

### (Moving Body)

The assembly 10B3 is provided in a moving body, for example, a vehicle, which is the same as in the sixth embodiment. Specifically, the closed cross-section structural member 12 is provided as a cabin frame for an occupant.

As described above, in the seventh embodiment as well, a method for manufacturing a moving body is also provided as in the sixth embodiment.

### (Effects)

The present embodiment has the same effects as the effects of the sixth embodiment.

### [Eighth Embodiment]

### (Configuration)

Next, a configuration of an assembly 10A3 of an eighth embodiment will be described. Since the configuration of the assembly 10A3 of the eighth embodiment is substantially the same as the configuration of the assembly 10A2 of the sixth embodiment, different parts will be described.

FIG. 8A is a cross-sectional view of an example of the assembly 10A3 of the eighth embodiment.

A first surface 12B1 of a first joint portion 12B123 of a closed cross-section structural member 12 of the assembly 10A3 of the eighth embodiment includes a protrusion 12T. A recessed portion 14C4 into which the protrusion 12T is inserted is formed in a first surface 14B1 of a second joint portion 14B123 of an aluminum cast member 14.

### (Method for Manufacturing Assembly)

Since a method for manufacturing the assembly 10A3 of the eighth embodiment is substantially the same as the method for manufacturing the assembly 10A20 of the sixth embodiment, different parts will be described.

A mold for the aluminum cast member 14 is configured such that the recessed portion 14C4 is formed in the first surface 14B1 of the aluminum cast member 14. The aluminum cast member 14 is manufactured by using the mold.

The closed cross-section structural member 12 is manufactured such that the protrusion 12T is provided in the first surface 12B1.

The closed cross-section structural member 12 and the aluminum cast member 14 are disposed such that the protrusion 12T provided in the first surface 12B1 of the first joint portion 12B123 of the closed cross-section structural member 12 is inserted into the recessed portion 14C4 formed in the first surface 14B1 of the second joint portion 14B123 of the aluminum cast member 14.

### (Moving Body)

The assembly 10A3 is provided in a moving body, for example, a vehicle, which is the same as in the sixth embodiment. Specifically, the closed cross-section structural member 12 is provided as a cabin frame for an occupant.

As described above, in the eighth embodiment as well, a method for manufacturing a moving body is also provided as in the sixth embodiment.

### (Effects)

The present embodiment has the same effects as the effects of the sixth embodiment.

In the eighth embodiment, the structural member 12B and the aluminum cast member 14 are disposed such that the protrusion 12T provided in the first surface 12B1 of the first joint portion 12B123 of the closed cross-section structural member 12 is inserted into the recessed portion 14C4 formed in the first surface 14B1 of the second joint portion 14B123 of the aluminum cast member 14. Therefore, the positioning accuracy of the closed cross-section structural member 12 in the horizontal direction (direction perpendicular to the longitudinal direction (up-down direction of the paper surface in FIG. 5)) of the closed cross-section structural member 12 can be improved as compared with the sixth embodiment.

### [Ninth Embodiment]

### (Configuration)

Next, a configuration of an assembly 10A4 of a ninth embodiment will be described. Since a configuration of an assembly 10A5 of the ninth embodiment is substantially the same as the configuration of the assembly 10A4 of the eighth embodiment, different parts will be described.

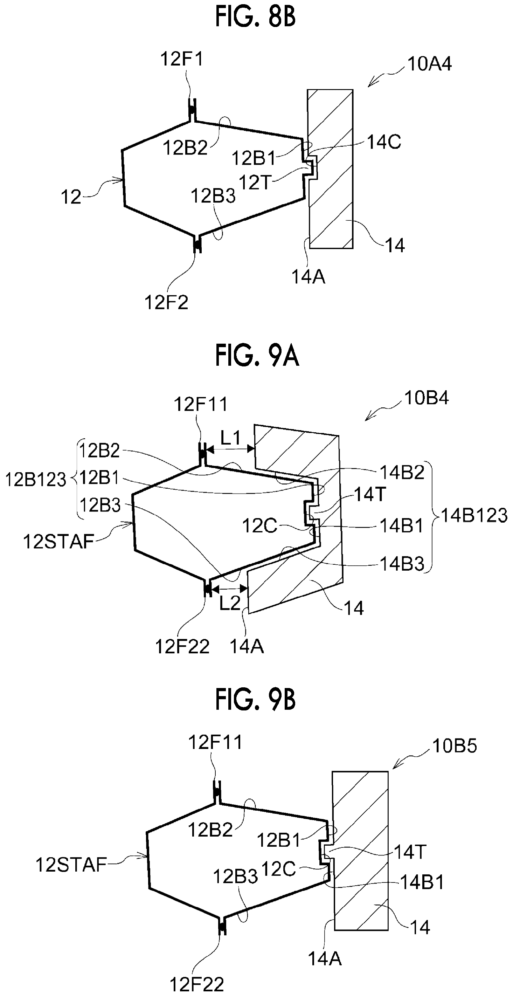

FIG. 8B is a cross-sectional view of an example of the assembly 10A4 of the ninth embodiment.

The first surface 12B1 of the closed cross-section structural member 12 of the assembly 10A4 of the ninth embodiment includes the protrusion 12T. The recessed portion 14C4 into which the protrusion 12T is inserted is formed in the surface 14A of the aluminum cast member 14 on the closed cross-section structural member 12 side.

The protrusion 12T and the recessed portion 14C4 have complementary shapes that are complementary to each other. The protrusion 12T is embedded in the recessed portion 14C4.

The protrusion 12T is an example of a "first joint portion" of the technology of the present disclosure. The recessed portion 14C4 is an example of a "second joint portion" of the technology of the present disclosure.

### (Method for Manufacturing Assembly)

Since a method for manufacturing the assembly 10A4 of the ninth embodiment is substantially the same as the method for manufacturing the assembly 10A4 of the eighth embodiment, different parts will be described.

A mold for the aluminum cast member 14 is configured such that the recessed portion 14C4 is formed in the surface 14A of the aluminum cast member 14 on the closed cross-section structural member 12 side. The aluminum cast member 14 is manufactured by using the mold.

The closed cross-section structural member 12 and the aluminum cast member 14 are disposed such that the protrusion 12T provided in the first surface 12B1 of the closed cross-section structural member 12 is inserted into the recessed portion 14C4 formed in the surface 14A of the aluminum cast member 14 on the closed cross-section structural member 12 side.

### (Moving Body)

The assembly 10A4 is provided in a moving body, for example, a vehicle, which is the same as in the eighth embodiment. Specifically, the closed cross-section structural member 12 is provided as a cabin frame for an occupant.

As described above, in the ninth embodiment as well, a method for manufacturing a moving body is also provided as in the eighth embodiment.

### (Effects)

The present embodiment has the same effects as the effects of the eighth embodiment.

### [Tenth Embodiment]

Next, a configuration of an assembly 10B4 of a tenth embodiment will be described. Since the configuration of the assembly 10B4 of the tenth embodiment is substantially the same as the configuration of the assembly 10B3 of the seventh embodiment, different parts will be described.

FIG. 9A is a cross-sectional view of an example of the assembly 10B4 of the tenth embodiment.

The first surface 12B1 of the closed cross-section structural member 12 of the assembly 10B4 of the tenth embodiment is provided with a recessed portion 12C. The first surface 14B1 of the aluminum cast member 14 is provided with a protrusion 14T to be inserted into the recessed portion 12C.

### (Method for Manufacturing Assembly)

Since a method for manufacturing the assembly 10B4 of the tenth embodiment is substantially the same as the method for manufacturing the assembly 10B3 of the seventh embodiment, different parts will be described.

A mold for the aluminum cast member 14 is configured such that the protrusion 14T is formed on the first surface 14B1 of the aluminum cast member 14. The aluminum cast member 14 is manufactured by using the mold.

The closed cross-section structural member 12 is manufactured such that the recessed portion 12C is provided on the first surface 12B1.

The closed cross-section structural member 12 and the aluminum cast member 14 are disposed such that the recessed portion 12C provided on the first surface 12B1 of the closed cross-section structural member 12 is inserted into the protrusion 14T formed on the first surface 14B1 of the aluminum cast member 14.

### (Moving Body)

The assembly 10A5 is provided in a moving body, for example, a vehicle, which is the same as in the seventh embodiment. Specifically, the closed cross-section structural member 12 is provided as a cabin frame for an occupant.

As described above, in the tenth embodiment as well, a method for manufacturing a moving body is also provided as in the seventh embodiment.

### (Effects)

The present embodiment has the same effects as the effects of the seventh embodiment.

### [Eleventh Embodiment]

### (Configuration)

Next, since a configuration of an assembly 10B5 of the eleventh embodiment is substantially the same as the configuration of the assembly 10B4 of the tenth embodiment, different parts will be described.

FIG. 9B is a cross-sectional view of an example of the assembly 10B5 of the eleventh embodiment.

A protrusion 14T to be inserted into the recessed portion 12C is formed on a surface 14A of the aluminum cast member 14 on the closed cross-section structural member 12 side.

The protrusion 14T and the recessed portion 12C have complementary shapes that are complementary to each other. The protrusion 14T is embedded in the recessed portion 12C.

The recessed portion 12C is an example of a "first joint portion" of the technology of the present disclosure. The protrusion 14T is an example of a "second joint portion" of the technology of the present disclosure.

### (Method for Manufacturing Assembly)

Since a method for manufacturing the assembly 10B5 of the eleventh embodiment is substantially the same as the method for manufacturing the assembly 10B4 of the tenth embodiment, different parts will be described.

A mold for the aluminum cast member 14 is configured such that the protrusion 14T is formed on the surface 14A of the aluminum cast member 14 on the closed cross-section structural member 12 side. The aluminum cast member 14 is manufactured by using the mold.

The closed cross-section structural member 12 and the aluminum cast member 14 are disposed such that the recessed portion 12C provided on the first surface 12B1 of the closed cross-section structural member 12 is inserted into the protrusion 14T formed on the surface 14A of the aluminum cast member 14 on the closed cross-section structural member 12 side.

### (Moving Body)

The assembly 10B5 is provided in a moving body, for example, a vehicle, which is the same as in the tenth embodiment. Specifically, the closed cross-section structural member 12 is provided as a cabin frame for an occupant.

As described above, in the eleventh embodiment as well, a method for manufacturing a moving body is also provided as in the tenth embodiment.

### (Effects)

The present embodiment has the same effects as the effects of the tenth embodiment.

### [Twelfth Embodiment]

### (Configuration)

Since a configuration of an assembly 10B6 of the twelfth embodiment is substantially the same as the configuration of the assembly 10B1 of the fourth embodiment, different parts will be described.

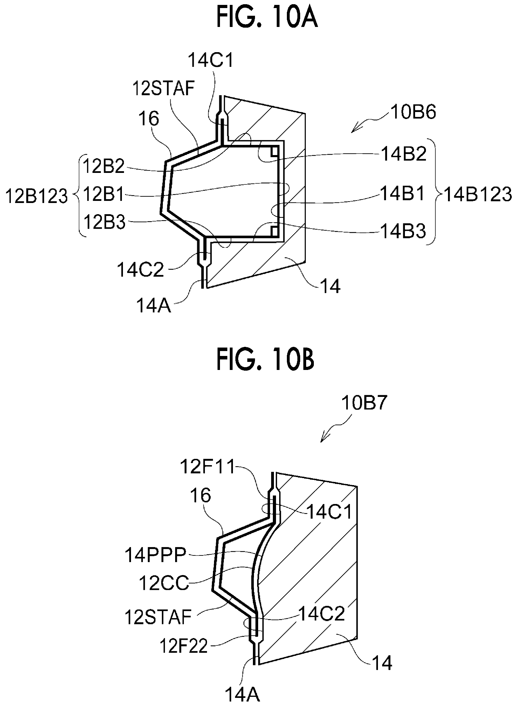

FIG. 10A is a cross-sectional view of an example of the assembly 10B6 of the twelfth embodiment.

The protrusion 14T is not formed on the first surface 14B1 of the second joint portion 14B123, and the opening portion 12K for inserting the protrusion 14T is not formed on the first surface 12B1 of the first joint portion 12B123.

An angle formed by the first surface 12B1 of the closed cross-section structural member 12STAF of the assembly 10B6 of the twelfth embodiment, and the second surface 12B2 and the third surface 12B3 intersecting the first surface 12B1 is a right angle.

An angle formed by the first surface 14B1 of the aluminum cast member 14, and the second surface 12B2 and the third surface 12B3 intersecting the first surface 14B1 is a right angle.

### (Method for Manufacturing Assembly)

Since a method for manufacturing the assembly 10B6 of the twelfth embodiment is substantially the same as the method for manufacturing the assembly 10B1 of the fourth embodiment, different parts will be described.

In the assembly 10B6 of the twelfth embodiment, the protrusion 14T is not formed on the first surface 14B1 of the second joint portion 14B123, and the opening portion 12K for inserting the protrusion 14T is not formed on the first surface 12B1 of the first joint portion 12B123.

The closed cross-section structural member 12STAF is manufactured such that an angle formed by the first surface 12B1, and the second surface 12B2 and the third surface 12B3 intersecting the first surface 12B1 is a right angle.

A mold for the aluminum cast member 14 is configured such that an angle formed by the first surface 14B1, and the second surface 12B2 and the third surface 12B3 intersecting the first surface 14B1 is a right angle. The aluminum cast member 14 is manufactured by using the mold.

### (Moving Body)

The assembly 10B6 is provided in a moving body, for example, a vehicle, which is the same as in the fourth embodiment. Specifically, the closed cross-section structural member 12 is provided as a cabin frame for an occupant.

As described above, in the twelfth embodiment as well, a method for manufacturing a moving body is also provided as in the fourth embodiment.

### (Effects)

The present embodiment has the same effects as the effects of the fourth embodiment.

### [Thirteenth Embodiment]

### (Configuration)

Since a configuration of an assembly 10B7 of the thirteenth embodiment is substantially the same as the configuration of the assembly 10B0 of the second embodiment, different parts will be described.

FIG. 10B is a cross-sectional view of an example of the assembly 10B7 of the thirteenth embodiment.

The first joint portion 12B123 of the closed cross-section structural member 12 of the assembly 10B0 of the second embodiment has a protruding shape including the first surface 12B1, the second surface 12B2, and the third surface 12B3, and the second joint portion 14B123 of the aluminum cast member 14 has a recessed shape including the first surface 14B1, the second surface 14B2, and the third surface 14B3.

On the other hand, in the assembly 10B7 of the present embodiment, the closed cross-section structural member 12 includes a curved surface 12CC recessed to the inner side of the closed cross-section structural member 12, and the aluminum cast member 14 includes a curved surface 14PPP protruding to the outer side (that is, the closed cross-section structural member 12 side), which is different from the above.

The curved surface 12CC and the curved surface 14PPP have complementary shapes that are complementary to each other. The protrusion 12T is embedded in the recessed portion 14C4.

The curved surface 12CC is an example of a "first joint portion" of the technology of the present disclosure. The curved surface 14PPP is an example of a "second joint portion" of the technology of the present disclosure.

As in the fourth embodiment, the flange portion accommodation units 14C1 and 14C2 that accommodate the first overlapping flange portion 12F1 and the second overlapping flange portion 12F2 are formed on the surface 14A of the aluminum cast member 14 on the closed cross-section structural member 12 side.

### (Method for Manufacturing Assembly)

Since a method for manufacturing the assembly 10B7 of the thirteenth embodiment is substantially the same as the method for manufacturing the assembly 10B0 of the second embodiment, different parts will be described.

In the assembly 10B7 of the thirteenth embodiment, a mold for manufacturing the aluminum cast member 14 is configured such that the curved surface 14PPP is formed and the flange portion accommodation units 14C1 and 14C2 are formed on the surface 14A of the aluminum cast member 14 on the closed cross-section structural member 12 side as in the third embodiment. The aluminum cast member 14 is manufactured using the mold.

The closed cross-section structural member 12STAF is formed such that the curved surface 12CC is formed.

### (Moving Body)

The assembly 10B7 is provided in a moving body, for example, a vehicle, which is the same as in the second embodiment. Specifically, the closed cross-section structural member 12 is provided as a cabin frame for an occupant.

As described above, in the thirteenth embodiment as well, a method for manufacturing a moving body is also provided as in the second embodiment.

### (Effects)

The present embodiment has the same effects as the effects of the second embodiment.

### [Fourteenth Embodiment]

### (Configuration)

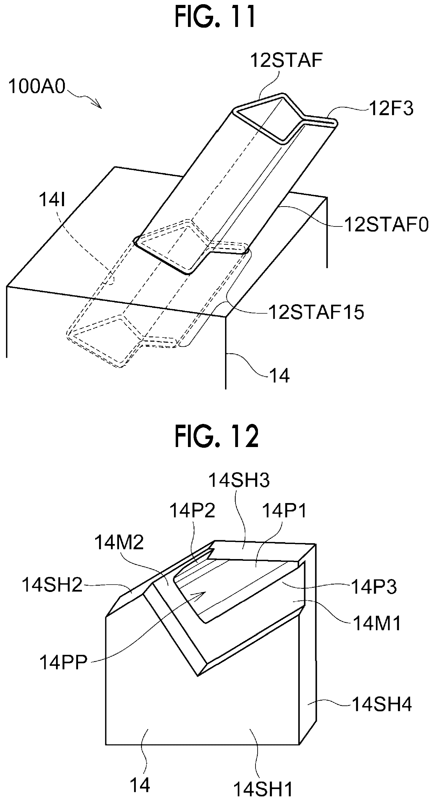

FIG. 11 is a cross-sectional view of an example of an assembly 100A0 of a fourteenth embodiment. The assembly 100A0 includes a closed cross-section structural member 12STAF including a first joint portion 12STAF15 and an aluminum cast member 14 including a second joint portion 14I. The closed cross-section structural member 12 and the aluminum cast member 14 are joined to each other by the first joint portion 12STAF15 and the second joint portion 14I.

The closed cross-section structural member 12STAF has a configuration substantially the same as the closed cross-section structural member 12STAF of the fifth embodiment, but is different from the closed cross-section structural member 12STAF of the fifth embodiment in that a cross section of the closed cross-section structural member 12STAF of the fifth embodiment is a hexagon, whereas a cross section of the closed cross-section structural member 12STAF of the present embodiment is a quadrangle.

The first joint portion 12STAF15 of the closed cross-section structural member 12 and the second joint portion 14I of the aluminum cast member 14 have complementary shapes that are complementary to each other.

The first joint portion 12STAF15 of the closed cross-section structural member 12STAF has the same configuration as a portion 12STAF0 of the closed cross-section structural member 12STAF other than the first joint portion 12STAF15.

The second joint portion 14I of the aluminum cast member 14 has a shape into which the first joint portion 12STAF15 can be inserted. The first joint portion 12STAF15 of the closed cross-section structural member 12STAF is embedded in the second joint portion 14I of the aluminum cast member 14.

### (Method for Manufacturing Assembly)

Since a method for manufacturing the assembly 100A0 of the fourteenth embodiment is substantially the same as the method for manufacturing the assembly 10B2 of the fifth embodiment, different parts will be described.

In the present embodiment, a mold for manufacturing the aluminum cast member 14 is configured such that the second joint portion 14I is formed on a surface 14A of the aluminum cast member 14 on a closed cross-section structural member 12 side. The aluminum cast member 14 is manufactured using the mold.

The closed cross-section structural member 12STAF and the aluminum cast member 14 are disposed such that the first joint portion 12STAF15 of the closed cross-section structural member 12STAF is embedded in the second joint portion 14I of the aluminum cast member 14.

### (Moving Body)

The assembly 100A0 is provided in a moving body, for example, a vehicle, which is the same as in the fifth embodiment. Specifically, the closed cross-section structural member 12STAF is provided as a cabin frame for an occupant.

As described above, in the present embodiment as well, a method for manufacturing a moving body is also provided as in the fifth embodiment.

### (Effects)

The present embodiment has the same effects as the effects of the fifth embodiment.

### [Fifteenth Embodiment]

### (Configuration)

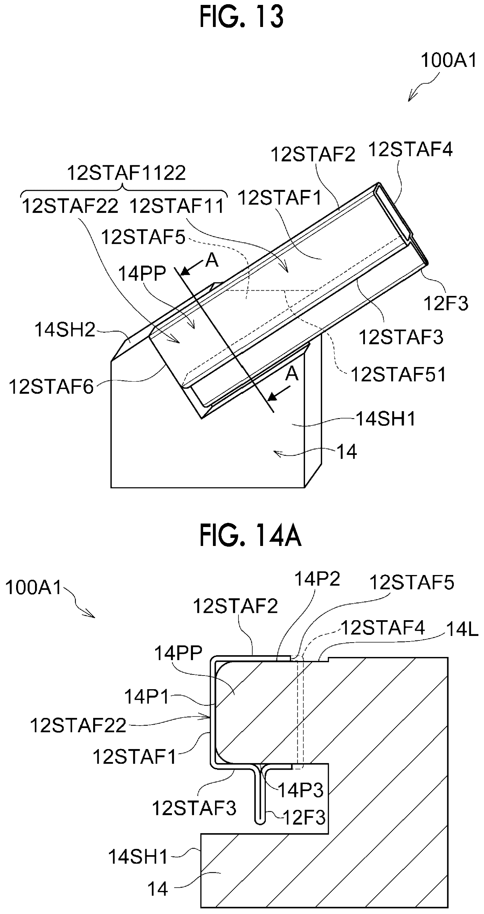

FIG. 12 is a cross-sectional view of an example of the aluminum cast member 14 of an assembly 100A1 of a fifteenth embodiment. FIG. 13 is a cross-sectional view of the assembly 100A1 of the fifteenth embodiment. FIG. 14A is a cross-sectional view taken along line A-A in FIG. 13.

As shown in FIGS. 12 to 14A, the assembly 100A1 includes a closed cross-section structural member 12STAF1122 including a first joint portion 12STAF22, and an aluminum cast member 14 including a second joint portion 14PP. The closed cross-section structural member 12STAF1122 and the aluminum cast member 14 are joined to each other by the first joint portion 12STAF22 and the second joint portion 14PP.

The closed cross-section structural member 12STAF1122 includes the first joint portion 12STAF22 and a closed cross-sectional portion 12STAF11.

A cross section of the closed cross-sectional portion 12STAF11 is quadrangular, and the closed cross-sectional portion 12STAF11 includes one flange 12F3.

As shown in FIG. 12, the second joint portion 14PP is provided at an end portion of the aluminum cast member 14. The second joint portion 14PP is formed by a first groove 14M1 and a second groove 14M2 provided on a first surface 14SH1 of the aluminum cast member 14. The first groove 14M1 and the second groove 14M2 intersect each other (for example, are orthogonal to each other) at one end, the other end of the first groove 14M1 reaches a fourth surface 14SH4, and the other end of the second groove 14M2 reaches a second surface 14SH2.

A shape of the second joint portion 14PP is a shape that matches a shape of an internal space of the closed cross-section structural member 12STAF1122. The second joint portion 14PP includes a first end surface 14P1, and a second end surface 14P2 and a third end surface 14P3 that intersect (for example, are orthogonal to) the first end surface 14P1 and are parallel to each other. The first end surface 14P1, the second end surface 14P2, and the third end surface 14P3 extend in a direction parallel to the surface of the second surface 14SH2 of the aluminum cast member 14. Sides of the first end surface 14P1, the second end surface 14P2, and the third end surface 14P3 that intersect a third surface 14SH3 are edges of the three end surfaces 14P1 to 14P3.

As shown in FIGS. 13 and 14A, the closed cross-section structural member 12STAF1122 is a tubular member formed such that the cross section is quadrangular as described above. The closed cross-section structural member 12STAF1122 includes a first side surface portion 12STAF1, a fourth side surface portion 12STAF4 that faces the first side surface portion 12STAF1 in parallel, and a second side surface portion 12STAF2 and a third side surface portion 12STAF3 that connect both end portions of the first side surface portion 12STAF1 and both end portions of the fourth side surface portion 12STAF4. The closed cross-section structural member 12STAF1122 is configured such that the cross section is quadrangular by the side surface portions 12STAF1 to 12STAF4. In addition, a flange 12F3 is provided in the third side surface portion 12STAF3 in the axial direction.

An opening portion 12STAF5 is provided in the fourth side surface portion 12STAF4 at a distal end portion of the closed cross-section structural member 12STAF1122 configured as described above. A portion where the opening portion 12STAF5 is provided is a first joint portion 12STAF22 in the closed cross-section structural member 12STAF1122, and the first joint portion 12STAF22 is fitted to the second joint portion 14PP. That is, the shape of the first end surface 14P1, the second end surface 14P2, and the third end surface 14P3 of the second joint portion 14PP and the shape formed by the inner walls of the first side surface portion 12STAF1, the second side surface portion 12STAF2, and the third side surface portion 12STAF3 of the first joint portion 12STAF22 have complementary shapes that are complementary to each other. Therefore, the first side surface portion 12STAF1 and the first end surface 14P1 are in surface contact with each other, the second side surface portion 12STAF2 and the second end surface 14P2 are in surface contact with each other, and the third side surface portion 12STAF3 and the third end surface 14P3 are in surface contact with each other. The first side surface portion 12STAF1 and the first end surface 14P1, the second side surface portion 12STAF2 and the second end surface 14P2, and the third side surface portion 12STAF3 and the third end surface 14P3 are joined to each other. As a result, the first joint portion 12STAF22 of the closed cross-section structural member 12STAF1122 and the second joint portion 14PP of the aluminum cast member 14 are joined to each other.

In a state where the first joint portion 12STAF22 and the second joint portion 14PP are joined to each other, the flange 12F3 is located in the first groove 14M1, the distal end surface 12STAF6 of the closed cross-section structural member 12STAF1122 abuts on the inner wall of the second groove 14M2, and the opening portion edge 12STAF51 located at the distal end of the fourth side surface portion 12STAF4 abuts on the third surface 14SH3. In this way, by providing a portion that abuts on the surface of the aluminum cast member 14 at the distal end surface 12STAF6 and the opening portion edge 12STAF51, the number of welding or bonding portions can be increased, and the joint strength can be further improved. In particular, since the opening portion edge 12STAF51 is formed obliquely with respect to the axial direction of the opening portion edge 12STAF51, the joint distance can be increased.

As shown in FIG. 14A, in a state where the first joint portion 12STAF22 and the second joint portion 14PP are joined to each other, the outer surface of the first side surface portion 12STAF1 is located on the same plane as the first surface 14SH1 of the aluminum cast member 14 or on the inner side of the first surface 14SH1 and does not protrude from the aluminum cast member 14. Therefore, interference with a component disposed around the aluminum cast member 14 is suppressed. Similarly, a step portion 14L having a depth equal to or greater than the thickness of the second side surface portion 12STAF2 is formed between the second surface 14SH2 of the aluminum cast member 14 and the second end surface 14P2. Due to the step portion 14L, the second side surface portion 12STAF2 in the joined state is located on the same plane as the second surface 14SH2 of the aluminum cast member 14 or on the inner side of the second surface 14SH2.

### (Method for Manufacturing Assembly)

The closed cross-section structural member 12STAF1122 and the aluminum cast member 14 are manufactured. The closed cross-section structural member 12 and the aluminum cast member 14 may be manufactured in any order or simultaneously.

The first joint portion 12STAF22 is fitted to the second joint portion 14PP. The first side surface portion 12STAF1 and the first end surface 14P1 are in surface contact with each other, the second side surface portion 12STAF2 and the second end surface 14P2 are in surface contact with each other, and the third side surface portion 12STAF3 and the third end surface 14P3 are in surface contact with each other. Then, the first side surface portion 12STAF1 and the first end surface 14P1, the second side surface portion 12STAF2 and the second end surface 14P2, and the third side surface portion 12STAF3 and the third end surface 14P3 are joined to each other, respectively. As a result, the first joint portion 12STAF22 of the closed cross-section structural member 12STAF1122 and the second joint portion 14PP of the aluminum cast member 14 are joined to each other.

### (Moving Body)

The assembly 100A1 is provided in a moving body, for example, a vehicle, which is the same as in the first embodiment. Specifically, the closed cross-section structural member 12STAF1122 is provided as a cabin frame for an occupant.

As described above, in the fifteenth embodiment as well, a method for manufacturing a moving body is also provided as in the first embodiment.

### (Effects)

The present embodiment has the same effects as the effects of the first embodiment.

### (Modification Example of Assembly of Fifteenth Embodiment)

Next, a modification example of the assembly 100A1 of the fifteenth embodiment will be described. Since the modification example of the assembly 100A1 of the fifteenth embodiment is substantially the same as the assembly 100A1 of the fifteenth embodiment, only different parts will be described.

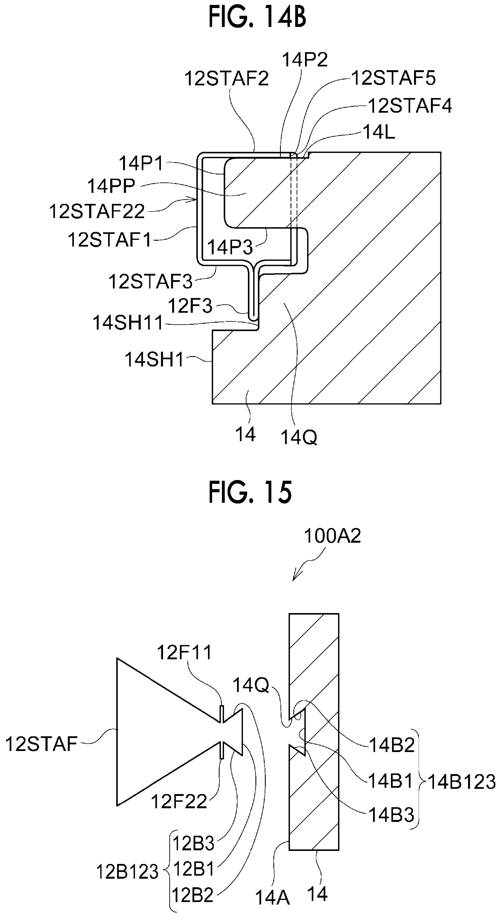

FIG. 14B is a cross-sectional view taken along line A-A in FIG. 13 in the modification example of 100A1 of the fifteenth embodiment.

In the assembly 100A1 (see FIG. 14A) of the fifteenth embodiment, the outer surface of the first side surface portion 12STAF1 does not protrude from the first surface 14SH1 of the aluminum cast member 14. On the other hand, in the present modification example (see FIG. 14B), the outer surface of the first side surface portion 12STAF1 protrudes from the first surface 14SH1 of the aluminum cast member 14, which is different from the above.

In the assembly 100A1 (see FIG. 14A) of the fifteenth embodiment, the first side surface portion 12STAF1 and the first end surface 14P1 are in surface contact with each other. On the other hand, in the present modification example (see FIG. 14B), the first side surface portion 12STAF1 and the first end surface 14P1 are spaced apart from each other, which is different from the above.

The aluminum cast member 14 of the present modification example (see FIG. 14B) includes a protrusion portion 14Q that protrudes into the groove 14M1. In the assembly 100A1 (see FIG. 14A) of the fifteenth embodiment, the flange 12F3 is located in the first groove 14M1. On the other hand, in the present modification example (see FIG. 14B), the flange 12F3 is joined to the protrusion portion 14Q that protrudes into the first groove 14M1, which is different from the above.

In the assembly 100A1 (see FIG. 14A) of the fifteenth embodiment, the first side surface portion 12STAF1 and the first end surface 14P1, the second side surface portion 12STAF2 and the second end surface 14P2, and the third side surface portion 12STAF3 and the third end surface 14P3 are each in surface contact with each other and are joined to each other. On the other hand, in the present modification example (see FIG. 14B), only the second side surface portion 12STAF2 and the second end surface 14P2, and the flange 12F3 and the protrusion portion 14Q are each in surface contact with each other and are joined to each other, but the first side surface portion 12STAF1 and the first end surface 14P1, and the third side surface portion 12STAF3 and the third end surface 14P3 are not joined to each other, which is different from the above.

In this way, in the assembly of the present modification example, the second side surface portion 12STAF2 and the second end surface 14P2, and the flange 12F3 and the protrusion portion 14Q each have a complementary shape. In addition, the assembly of the present modification example is joined by two pairs of surfaces that intersect (for example, are orthogonal to each other). As described above, the two pairs of surfaces are the first pair of surfaces of the second side surface portion 12STAF2 and the second end surface 14P2, and the second pair of surfaces of the flange 12F3 and the protrusion portion 14Q.

### [Sixteenth Embodiment]

### (Configuration)

Next, a configuration of an assembly 100A2 of a sixteenth embodiment will be described. Since the configuration of the assembly 100A2 of the sixteenth embodiment is substantially the same as the configuration of the assembly 10B0 of the second embodiment, different parts will be described.

FIG. 15 is an exploded cross-sectional view of an example of the assembly of the sixteenth embodiment.

In a first joint portion 12B123 of the closed cross-section structural member 12, an angle formed by the first surface 12B1, and the second surface 12B2 and the third surface 12B3 intersecting the first surface 12B1 is an acute angle.

In a second joint portion 14B123 of the aluminum cast member 14, an angle formed by the first surface 14B1, and the second surface 12B2 and the third surface 12B3 intersecting the first surface 14B1 is an acute angle.

### (Method for Manufacturing Assembly)

Since a method for manufacturing the assembly 100A2 of the sixteenth embodiment is substantially the same as the method for manufacturing the assembly 10B0 of the second embodiment, different parts will be described.

A mold for manufacturing the aluminum cast member 14 is configured such that an angle formed by the first surface 14B1, and the second surface 12B2 and the third surface 12B3 intersecting the first surface 14B1 is an acute angle. The aluminum cast member 14 is manufactured using the mold.

A closed cross-section structural member 12STAF is manufactured such that an angle formed by the first surface 12B1, and the second surface 12B2 and the third surface 12B3 intersecting the first surface 12B1 is an acute angle.

### (Moving Body)

100A2 is provided in a moving body, for example, a vehicle, which is the same as in the second embodiment. Specifically, the closed cross-section structural member 12STAF is provided as a cabin frame for an occupant.

As described above, in the sixteenth embodiment as well, a method for manufacturing a moving body is also provided as in the second embodiment.

### (Effects)

The present embodiment has the same effects as the effects of the second embodiment.

### [Modification Examples]

In each of the above-described embodiments, a cast member such as iron, copper, or brass may be used instead of the aluminum cast member 14. In addition, the second joint portion may be manufactured by cutting a member such as aluminum, iron, copper, or brass instead of the aluminum cast member 14.

The moving body is not limited to the vehicle, and may be, for example, a construction machine or an agricultural machine. The construction machine includes, for example, an excavator car. The agricultural machine includes a tractor, a combine, or the like. The assembly is used in a cabin of each of the construction machine and the agricultural machine. In addition, the moving body may be an aircraft. For example, the moving body may be a balloon, an airship, a glider, an airplane, a helicopter, or the like. Further, the moving body may be a flying object, for example, a missile, a space rocket, a spacecraft, or the like. In addition, the moving body may be a ship, for example, a tanker or the like.

### [Each Assembly]

The closed cross-section structural members 12 of the assemblies 10A0 to 10A5, 10B0 to 10B7 of the first to sixteenth embodiments and the above-described modification examples are made of a steel pipe material.

In addition, the member 14 is a member made of a material different from the closed cross-section structural members 12 of the assemblies 10A0 to 10A5, 10B0 to 10B7. The member 14 is an aluminum cast member, but may be a cast member made of iron, copper, brass, or the like as in the above-described modification example.

### [Method for Manufacturing Assembly]

The closed cross-section structural members 12 and the member 14 are joined to each other as described above, specifically, are fitted to each other. More specifically, the closed cross-section structural members 12 are fitted into the aluminum cast member 14 by being inserted into the aluminum cast member 14.

In addition, the closed cross-section structural member 12 includes flange portions (12F1, 12F2, 12F3), and the flange portions are fitted into recessed portions (flange portion accommodation units 14C1, 14C2, 14C3) provided in the aluminum cast member 14 by being inserted into the recessed portions.

### [Steel Pipe]

As described above, the closed cross-section structural member is a steel pipe (12STAF) made of one steel pipe material, and the steel pipe (12STAF) can be fitted to a member made of a material different from the steel pipe material.

### (Supplementary Notes)

The following supplementary notes are proposed from the first to sixteenth embodiments and the above-described modification examples.

### (Supplementary Note 1)

An assembly including
a closed cross-section structural member made of a steel pipe material, and
a member made of a material different from the closed cross-section structural member,
in which the closed cross-section structural member and the member are fitted to each other.

### (Effects)

In the related art, the closed cross-section structural member and the aluminum cast member are joined by planar contact. However, in the invention of Supplementary Note 1, the joint strength between the closed cross-section structural member and the material different from the closed cross-section structural member can be made stronger than that in the related art, for fitting the closed cross-section structural member and the member made of the material different from the closed cross-section structural member to each other.

### (Supplementary Note 2)

The assembly according to Supplementary Note 1, in which the member is an aluminum cast member.

### (Effects)

Since the density of aluminum is lower than that of iron, copper, and brass, the invention of Supplementary Note 2 can be lighter than a member made of iron or the like.

### (Supplementary Note 3)

The assembly according to Supplementary Note 2, in which the closed cross-section structural member is fitted into the aluminum cast member by being inserted into the aluminum cast member.

### (Effects)

Since the closed cross-section structural member is fitted into the aluminum cast member by being inserted into the aluminum cast member in this way, the invention of Supplementary Note 3 can make the joint strength between the closed cross-section structural member and the aluminum cast member stronger than that in the related art in which the closed cross-section structural member and the aluminum cast member are joined to each other by planar contact.

### (Supplementary Note 4)

The assembly according to Supplementary Note 2 or 2,
in which the closed cross-section structural member includes a flange portion, and
the flange portion is fitted into a recessed portion provided in the aluminum cast member by being inserted into the recessed portion.

### (Effects)

Since the flange portion of the closed cross-section structural member is fitted into the recessed portion provided in the aluminum cast member by being inserted into the recessed portion in this way, the invention of Supplementary Note 4 can facilitate the positioning of the closed cross-section structural member and the aluminum cast member.

### (Supplementary Note 5)

A steel pipe made of a steel pipe material, in which the steel pipe is configured to be fitted to a member made of a material different from the steel pipe.

### (Effects)

Since the steel pipe pipe can be fitted to the member made of the material different from the steel pipe pipe in this way, the invention of Supplementary Note 5 can make the joint strength between the closed cross-section structural member and the member made of the material different from the closed cross-section structural member stronger than that in the related art in which the closed cross-section structural member and the member made of the material different from the closed cross-section structural member are joined to each other by planar contact.

### (Supplementary Note 6)

A method for manufacturing an assembly, including
fitting a closed cross-section structural member made of a steel pipe material and a member made of a material different from the closed cross-section structural member to each other, thereby manufacturing the assembly.

### (Effects)

In the related art, the closed cross-section structural member and the aluminum cast member are joined by planar contact. However, in the present embodiment, the joint strength between the closed cross-section structural member and the aluminum cast member for fitting the closed cross-section structural member and the aluminum cast member to each other can be made stronger than that in the related art.

In the related art, the closed cross-section structural member and the aluminum cast member are joined by planar contact. However, in the invention of Supplementary Note 6, the joint strength between the closed cross-section structural member and the material different from the closed cross-section structural member can be made stronger than that in the related art, for fitting the closed cross-section structural member and the member made of the material different from the closed cross-section structural member to each other.

## Claims

1. An assembly comprising:
a closed cross-section structural member made of a steel pipe material; and
a member made of a material different from the closed cross-section structural member,
wherein the closed cross-section structural member and the member are fitted to each other.

2. The assembly according to claim 1,
wherein the member is an aluminum cast member.

3. The assembly according to claim 2,
wherein the closed cross-section structural member is fitted into the aluminum cast member by being inserted into the aluminum cast member.

4. The assembly according to claim 2,
wherein the closed cross-section structural member includes a flange portion, and
the flange portion is fitted into a recessed portion provided in the aluminum cast member by being inserted into the recessed portion.

5. A steel pipe made of a steel pipe material, wherein the steel pipe is configured to be fitted to a member made of a material different from the steel pipe.

6. A method for manufacturing an assembly, comprising:
fitting a closed cross-section structural member made of a steel pipe material and a member made of a material different from the closed cross-section structural member to each other, thereby manufacturing the assembly.
